Europäisches Patentamt

European Patent Office

Office européen des brevets

(19)

(11) Numéro de publication : **0 038 752**
**B1**

(12) **FASCICULE DE BREVET EUROPÉEN**

(45) Date de publication du fascicule du brevet :
29.02.84

(51) Int. Cl.³ : **B 01 D 17/02, C 02 F 1/40**

(21) Numéro de dépôt : **81400613.6**

(22) Date de dépôt : **16.04.81**

(54) Appareil et installation de séparation de liquides non miscibles de densités différentes.

(30) Priorité : 21.04.80 FR 8008931

(43) Date de publication de la demande :
28.10.81 Bulletin 81/43

(45) Mention de la délivrance du brevet :
29.02.84 Bulletin 84/09

(84) Etats contractants désignés :
AT BE CH DE GB IT LI LU NL SE

(56) Documents cités :
DE-A- 2 652 632
FR-A-   553 165
FR-A-   577 288
FR-A-   594 122
FR-A-   965 504
FR-A- 1 459 465
FR-A- 2 255 931
GB-A-   205 935
GB-A-   787 804
US-A- 1 777 535
US-A- 1 920 565
US-A- 2 342 950

(73) Titulaire : **Etablissements André BARDET S.A.
(société anonyme)
89-91 rue des Chantereines
F-93100 MONTREUIL-sous-BOIS (FR)**

(72) Inventeur : **Brignon, François
12, Rue Detaille
F-93250 Villemomble (FR)**

(74) Mandataire : **Phélip, Bruno et al
c/o Cabinet Harlé & Phélip 21, rue de la Rochefoucauld
F-75009 Paris (FR)**

Appareil et installation de séparation de liquides non miscibles de densités différentes

La présente invention concerne un appareil et une installation de séparation de deux liquides non miscibles de densités différentes.

L'invention s'applique plus particulièrement au déshuilage des nettoyants utilisés dans l'industrie tels que notamment les lessives industrielles.

L'industrie en général et plus particulièrement l'industrie mécanique utilise une énorme quantité de nettoyants de dégraissage et de lavage des pièces fabriquées et aussi bien pour des raisons d'économies que pour satisfaire à la réglementation du déversement des huiles dans les eaux superficielles, souterraines et de mer, il est devenu absolument essentiel de traiter de la manière la plus poussée possible notamment les bains usés de dégraissage et les eaux de lavage des machines à laver industrielles, le traitement ayant pour but d'une part de limiter la pollution, et d'autre part de permettre la récupération séparée des huiles et des dégraissants en vue de leur réutilisation.

La séparation des deux phases liquides d'une émulsion ou d'une suspension est une opération dénommée « cassage » qui peut s'effectuer soit par voie chimique, soit par voie physique, le procédé utilisé selon l'invention se rattachant à cette dernière voie et mettant en œuvre le phénomène physique de coalescence des fines gouttelettes d'huile en suspension dans le dégraissant à purifier. Rappelons que la coalescence est la faculté qu'ont les particules d'un liquide finement divisé de se regrouper pour reconstituer une phase liquide continue.

Bien entendu, l'utilisation de ce phénomène physique dans le but de séparer deux liquides non miscibles est déjà connue et utilisée dans de nombreuses installations de cassage de dispersion d'huile dans une phase aqueuse. On connaît notamment des appareils de séparation comportant des faisceaux de plaque de coalescence parallèles et inclinés entre lesquels s'écoule le dégraissant à déshuiler, lesdites plaques de coalescence étant prévues ondulées sur certains séparateurs.

On connaît également des appareils de séparation qui associent les phénomènes de coalescence et de sédimentation et cherchent parfois à accélérer la séparation en imposant un mouvement tournant au mélange à épurer introduit dans le séparateur.

Dans tous ces appareils connus, la coalescence des gouttelettes d'huile se fait généralement à contre-courant de la phase liquide dans laquelle elles sont en suspension, ce qui entraîne un faible rendement de séparation et oblige à prévoir des installations surdimensionnées pour assurer un débit suffisant de récupération. En outre, dans les séparateurs précités, le mouvement de rotation du mélange liquide introduit dans l'appareil crée une turbulence interne assurant un brassage permanent des phases et s'opposant à la coalescence naturelle des gouttelettes huileuses. Il en résulte une baisse notable d'efficacité qu'il est nécessaire de compenser par de multiples passages du mélange dans le séparateur au détriment du rendement de l'installation.

Ainsi, plus précisément on connaît selon l'art antérieur :

Le brevet US-A-1.920.565 qui concerne un procédé et un appareil pour séparer des mélanges huile-eau.

L'appareil décrit dans ce brevet US se compose d'un premier séparateur A dans lequel est effectuée une première séparation de l'huile et de l'eau. Le résidu qui renferme encore de l'huile est amené dans un appareil B et est mis en contact avec une huile légère qui contient ou ne contient pas un agent de contrôle d'émulsion tel qu'un oléate de calcium. Ce mélange est ensuite séparé dans un second séparateur C en eau pure et en huile.

L'appareil décrit dans ce document cité implique tant l'addition d'huile légère qu'une chambre de brassage ou d'agitation et des moyens d'agitation.

La DE-A-2.652.632 qui décrit une installation pour récupérer de l'huile comprenant notamment une canalisation oblongue 42 s'étendant à la périphérie d'une cuve 32, ladite canalisation 42 présentant une pluralité d'orifices 34 en communication avec la cuve 32. Un tuyau 18 amène le mélange huile/eau à séparer dans la canalisation 42 et le mélange est séparé au travers de moyens de coalescence 48.

Cette installation s'applique à un bateau.

Le brevet FR-A-577.288 qui décrit un appareil pour effectuer la séparation de pétrole et d'eau. Cet appareil est constitué par un conduit en U comportant deux branches a et b. Ce document enseigne un réglage en hauteur sur la branche b au moyen d'un manchon g.

Le brevet US-A-2.342.950 qui décrit un appareil pour traiter des liquides tels que des émulsions ou des mélanges d'huile se composant d'huile froide, d'émulsions d'huile et d'eau par chauffage du liquide, dégagement des constituants du liquide qui sont facilement gazéifiables puis séparation de l'eau de l'huile dans une zone calme.

La demande de brevet FR-A-2.255.931 qui décrit un dispositif séparateur d'huile comprenant une chambre de séparation 16 dans laquelle l'huile qui s'élève franchit des chicanes 26. L'huile est éliminée par un trop-plein 33 dont le niveau est réglable.

Le brevet GB-A-787.804 qui décrit un procédé et un appareil pour séparer de l'huile d'eau de ballast dans les cuves de pétroliers. Selon ce brevet GB il est prévu de pomper le mélange d'huile et d'eau jusqu'à l'obtention d'une surface exempte d'huile tout en aérant le mélange des deux liquides pour faciliter leur séparation.

Le brevet GB-A-205.935 qui décrit un procédé et un appareil pour séparer des liquides de densité différente notamment un mélange d'huile et d'eau.

L'appareil mentionné dans ce brevet GB-A-205.935 comporte une cuve D¹ dans laquelle est introduit le mélange eau-huile à séparer. Ce mélange s'écoule par l'intermédiaire d'un tuyau D pour être dirigé contre un déflecteur D². Une chambre de séparation principale A¹ et une enveloppe tubulaire B sont continuellement pleines de liquide, la chambre A est remplie d'eau tandis que l'enveloppe B est remplie d'huile. L'eau passe dans le tuyau E et est dirigée dans le réservoir F¹. L'huile passe dans le réservoir B¹ et est déchargée par le déversoir B².

Le brevet FR-A-1.459.465 qui décrit un appareil pour la séparation d'huile à partir d'un mélange d'huile et d'eau usée.

L'appareil comprend une cuve 1 où le mélange à séparer est introduit par un tuyau 4. Le mélange est déchargé dans la partie 3 de la cuve 1 par l'intermédiaire d'un tuyau annulaire 5 pourvu de perforations ; le mélange étant déchargé le long de la paroi d'un déflecteur 6. Cet effet est poursuivi jusqu'à ce que le mélange atteigne le tuyau de décharge 23. L'huile qui flotte est alors évacuée par l'intermédiaire du tuyau 23. Ce brevet FR-A-1.459.465 concerne un appareil dont le principe est différent de celui de la présente invention, en effet, il convient de remarquer que la convergence de la surface conique (réduction de surface) se produit vers le bas, c'est-à-dire en opposition au mouvement naturel des particules d'huile qui tendent à remonter.

De ce fait, la coalescence n'est pas favorisée par la réduction de la surface.

De plus les particules d'huile sont d'abord mises en mouvement vers le bas, alors que la séparation par gravité se fait, conformément à la présente invention, comme décrit ci-après, par la remontée de ces particules, dès leur entrée dans la chambre active.

Selon l'appareil du brevet FR-A-1.459.465, les gouttes d'huile sont soumises à un mouvement artificiel, défavorable, qui tend à les entraîner vers le bas avec le flux de liquide dense.

Le but de la présente invention est donc de proposer un appareil de séparation en continu ainsi qu'une installation incorporant ledit appareil et permettant d'effectuer une séparation en continu très poussée de deux liquides non miscibles de densités différentes avec un rendement très élevé sous un encombrement réduit.

Selon l'invention, il est prévu un appareil de séparation de deux liquides non miscibles de densités différentes comportant une cuve dans laquelle sont ménagées des chambres séparées de collecte des phases lourde et légère et une chambre de séparation contenant un collecteur de phase légère formé par la partie supérieure d'un entonnoir convergeant vers le haut et un collecteur de phase lourde situé à la partie inférieure de la chambre de séparation, ledit collecteur de phase lourde étant constitué d'un élément creux percé de trous de captage et communiquant avec un conduit ascendant débouchant dans la chambre de collecte de phase lourde à un niveau légèrement inférieur à celui de l'orifice supérieur du collecteur de phase légère, lesdits collecteurs assurant la communication entre la chambre de séparation et les chambres de collecte correspondantes, un distributeur statique du mélange à séparer situé entre les collecteurs de phase légère et de phase lourde, caractérisé en ce que la chambre de séparation est un cylindre dont la partie supérieure est délimitée par une paroi en forme d'entonnoir convergeant vers le haut, le distributeur statique du mélange à séparer se compose d'un conduit périphérique interne qui longe horizontalement la paroi latérale de la cuve et comporte des trous de distribution répartis le long de cette paroi, les trous de captage du collecteur de phase lourde sont situés sur la face inférieure de l'élément creux.

Préférentiellement, les trous du distributeur débouchent vers le haut, à proximité de la base de l'entonnoir qui forme la paroi supérieure de la chambre de séparation. Quant au collecteur de phase lourde, il se compose préférentiellement d'un conduit en forme de boucle s'étendant horizontalement au voisinage du fond de la chambre de séparation et d'un conduit vertical ascendant raccordé au conduit annulaire et dont l'orifice de sortie est légèrement en contrebas de l'orifice de sortie de l'entonnoir collecteur de la phase légère.

Le fond de la chambre de séparation peut être en forme d'entonnoir convergent vers le bas avec le conduit annulaire du collecteur de phase lourde disposé sensiblement à mi-hauteur dudit entonnoir.

Pour effectuer en continu une séparation très poussée des deux liquides, on prévoit, selon l'invention, une installation de séparation qui comporte une batterie de deux appareils dont les caractéristiques ont été énoncées ci-dessus, lesdits appareils étant reliés en série et l'installation comportant en outre un bac de détente et de dégazage relié à l'entrée du distributeur d'un premier desdits appareils, un réservoir de recyclage en charge avec régulation par flotteur, des moyens de captage à différence de niveau constante immergés dans le bain et des moyens de pompage des liquides à partir du bain en direction du bac de détente, les sorties des chambres de collecte de la phase lourde des premier et second appareils étant reliées respectivement au distributeur statique du second appareil et à la cuve contenant le bain à épurer, tandis que les sorties des chambres de collecte de la phase liquide légère des premier et second appareils sont reliées respectivement à un bac de récupération et au réservoir de recyclage dont la sortie est elle-même reliée au moyen de pompage en amont de ceux-ci.

Selon l'invention, les moyens de captage à différence de niveau constante comportent un conduit fixe relié au moyen de pompage et muni d'un tronçon vertical d'extrémité, un tube coulissant dans ledit tronçon et des flotteurs supportant le tube coulissant à une profondeur déterminée dans le bain.

L'invention va maintenant être décrite plus en détail en se référant à un mode de réalisation particulier donné à titre d'exemple non limitatif et représenté sur les dessins annexés dans lesquels :

Figure 1 représente une vue en perspective partiellement arrachée d'un appareil de séparation selon l'invention.

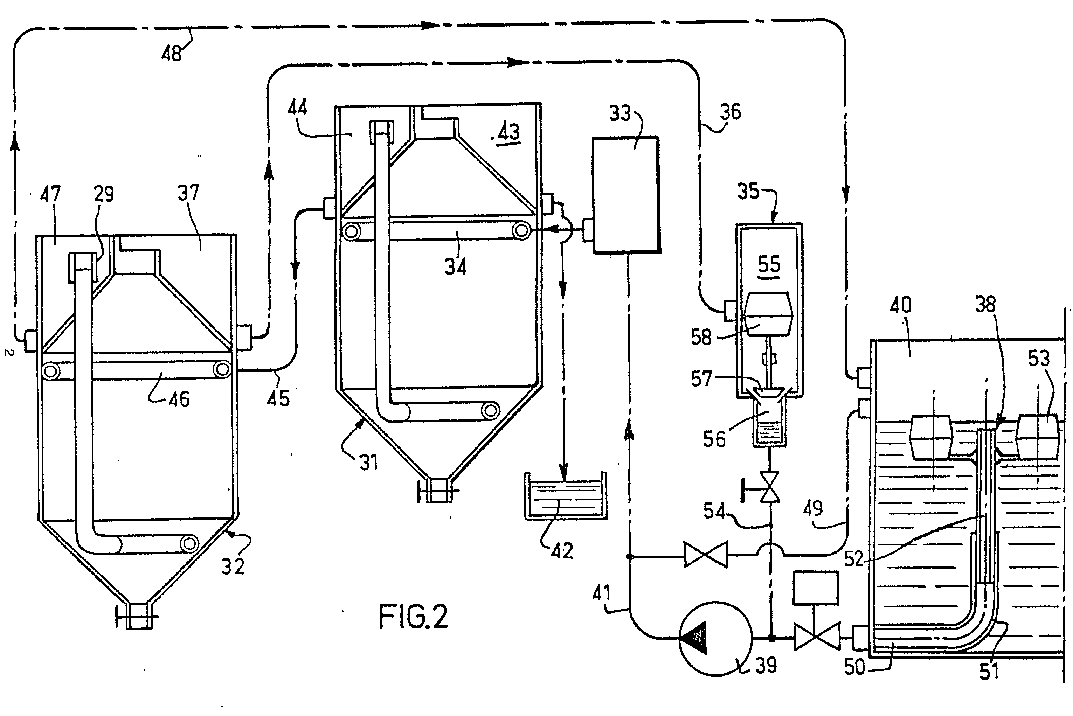

Figure 2 représente une vue schématique partiellement en coupe d'une installation de séparation en continu selon l'invention, et

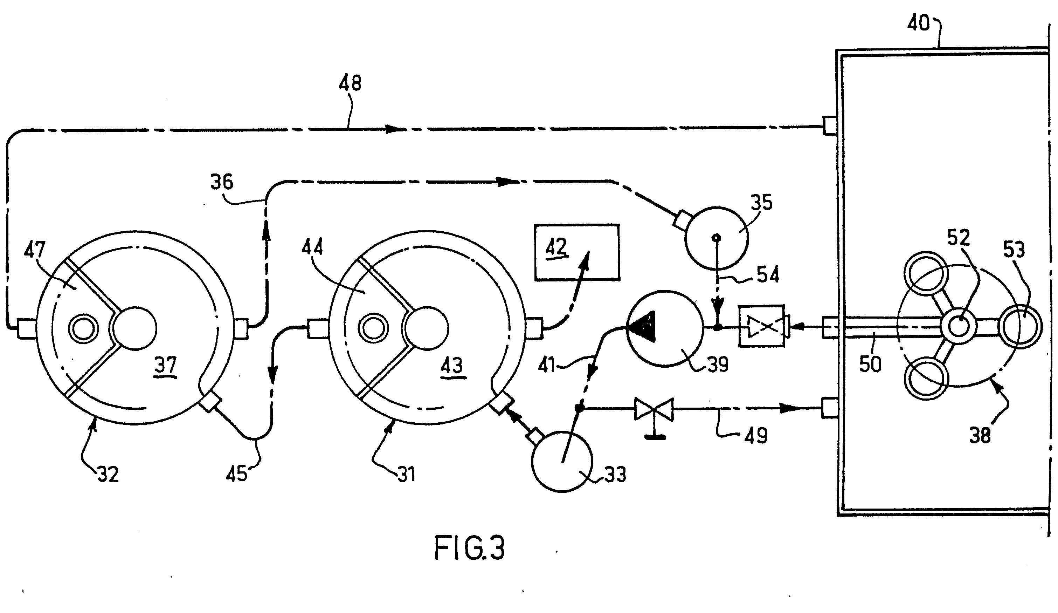

Figure 3 représente une vue schématique de dessous de l'installation de la figure 2.

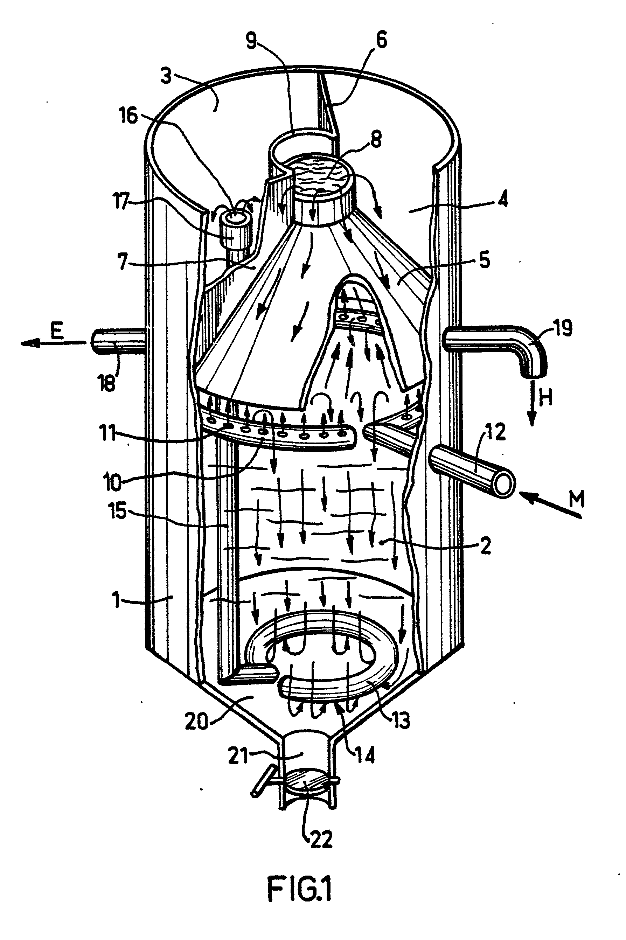

Tel que représenté sur la figure 1, l'appareil de séparation en continu de deux liquides non miscibles comporte une cuve cylindrique 1 en tôle métallique résistant à l'oxydation, l'espace intérieur de ladite cuve étant compartimenté en trois chambres séparées, à savoir une chambre inférieure principale 2 dite de séparation, et deux chambres de collecte respectivement 3 et 4 situées au-dessus de la chambre de séparation 2 et séparées de celle-ci par une cloison 5 en forme d'entonnoir convergent vers le haut et qui constitue la paroi supérieure de délimitation de la chambre de séparation. Les deux chambres de collecte supérieures 3 et 4 sont elles-mêmes séparées entre elles par des cloisons radiales verticales 6 et 7. Le sommet de l'entonnoir formé par la cloison 5 de séparation est percé d'un orifice 8 qui débouche dans la chambre de collecte 4 et est isolé de la chambre de collecte 3 par une cloison cylindrique verticale 9 qui réunit les deux cloisons radiales 6 et 7 en contournant ledit orifice 8.

A l'intérieur de la chambre de séparation 2 et à la base de la paroi supérieure en forme d'entonnoir convergent vers le haut 5 se trouve disposé un distributeur statique 10 de forme torique formé d'un conduit périphérique qui longe horizontalement la paroi latérale de la cuve 1 à proximité de la jonction circulaire de la paroi supérieure tronconique 5 avec la paroi cylindrique et latérale de la cuve 1. La partie supérieure de la paroi du conduit torique constituant le distributeur statique 10 est percée d'une multitude de trous de distribution 11 répartis le long du conduit torique et débouchant vers le haut en direction de la base de l'entonnoir 5. Les diamètres des trous et les espacements entre ceux-ci sont choisis de manière à obtenir un débit et une vitesse uniformes des flux distribués par le distributeur 10. Le distributeur statique 10 est connecté à un tube d'alimentation 12 traversant la paroi latérale de la cuve 1 de manière étanche et par lequel arrive le mélange M des deux liquides à séparer.

A l'intérieur de la chambre de séparation et à la base de celle-ci est disposé un élément collecteur creux 13 de forme torique constitué par un conduit annulaire percé à sa partie inférieure d'une multitude de trous de captage 14 régulièrement répartis sur toute la longueur dudit conduit, lequel est raccordé à un conduit vertical ascendant 15 qui traverse de manière étanche la paroi supérieure 5 en forme d'entonnoir, délimitant le haut de la chambre de séparation et se prolonge verticalement dans la chambre de collecte 3 pour déboucher légèrement en contrebas de l'orifice de sortie 8 du sommet de l'entonnoir 5 dont il est séparé par la cloison cylindrique verticale 9.

Afin de pouvoir régler la hauteur du niveau de l'orifice de sortie 16 du conduit ascendant, l'extrémité supérieure de ce dernier est équipée d'un manchon de réglage 17 susceptible d'être déplacé verticalement, par exemple par vissage en bout du conduit 15. Pour que l'appareil selon l'invention fonctionne, il est nécessaire qu'il existe une dénivellation entre les deux orifices de sortie 8 et 16 respectivement de l'entonnoir 5 et du conduit ascendant 15, l'orifice 16 étant toujours maintenu en contrebas de manière à assurer l'écoulement à partir de la chambre 2 et en direction de la chambre 3 selon le principe des vases communicants.

Des conduits d'évacuation des chambres 3 et 4 respectivement 18 et 19, sont prévus à la partie inférieure desdites chambres juste au-dessus de la ligne de jonction de la base de l'entonnoir 5 avec la paroi latérale de la cuve 1. Quant au fond 20 de ladite cuve, il est prévu de préférence en forme d'entonnoir tronconique convergent vers le bas percé en son centre et prolongé par une tubulure cylindrique de vidange 21 obturée en fonctionnement normal par une vanne étanche 22. Le conduit collecteur torique 13 prévu à la partie inférieure de la chambre de séparation 2 est disposé de préférence à l'intérieur et à mi-hauteur de l'entonnoir 20 formant le fond tronconique de la chambre de séparation 2.

L'appareil selon l'invention décrit précédemment fonctionne de la façon suivante :

Le mélange M des deux liquides à séparer, qui peut être par exemple une eau de lavage usée provenant d'une machine à laver industrielle et contenant des gouttelettes d'huile en suspension, arrive dans le distributeur statique 10 par le conduit radial d'alimentation 12 et ressort du distributeur à travers les trous 11 sous la forme d'une multitude de petits flux parallèles dirigés vers le haut le long de la paroi latérale de la cuve 1 et en direction de l'entonnoir supérieur 5, et en créant une arrivée de mélange uniformément répartie en vitesse et en quantité à la base de l'entonnoir 5. Chacun de ces flux est constitué par un courant de mélange à traiter, par exemple de lessive, dans lequel se trouvent en suspension de fines gouttelettes d'un second liquide non miscible et de densité plus faible tel que par exemple de l'huile. Lorsque l'appareil a atteint son régime normal de fonctionnement, la chambre de séparation 2 est remplie de mélange, dont le niveau arase le bord de l'orifice de sortie 8 du sommet de l'entonnoir 5. Du fait, d'une part, de l'injection des flux de mélange dans la masse de liquide contenu dans la chambre 2, et d'autre part de la différence de densité des deux fluides non miscibles, la vitesse ascensionnelle des gouttelettes du liquide de plus faible densité est supérieure à celle des particules du liquide plus lourd qui sont progressivement ralenties puis stoppées avant de redescendre vers le bas, tandis que les gouttelettes du liquide le plus léger progressent vers le haut le long de l'entonnoir 5 d'une part du fait de leur vitesse initiale d'arrivée dans la cuve, d'autre part du fait de la différence de densité et par coalescence dont l'effet est favorisé par la convergence de l'entonnoir. Au sommet du cône 5 et au niveau de l'orifice de sortie 8, la concentration des gouttelettes de liquide le plus léger rassemble celles-ci en une phase liquide légère à l'exception de toutes particules du liquide lourd et cette phase liquide légère déborde dans la chambre 4 par l'orifice 8 tel que représenté schématiquement par des flèches sur la figure 1. Le liquide léger, tel que l'huile, ainsi récupéré, se rassemble à la partie basse de la chambre 4 avant d'être évacué par la tubulure d'évacuation 19 vers un bac de récupération.

Simultanément, les particules du liquide le plus lourd descendent vers le fond en passant par la zone centrale de la cuve sans créer de contre-courant le long de la paroi coalescente constituée par la paroi de l'entonnoir. Ces particules sont captées par les trous de captage 14 du collecteur torique 13 avant de remonter dans le tube vertical 15 et ressortir dans la chambre de collecte 3, la circulation du liquide le plus lourd étant assurée selon le principe des vases communicants du fait de la dénivellation existant entre les deux orifices de sortie 8 et 16. On notera que les trous de captage 14 étant percés à la partie inférieure du conduit torique 13, les filets fluides sortant de la cuve doivent nécessairement suivre un trajet curviligne et venir lécher la paroi du collecteur 13, ce qui contribue à favoriser au niveau des trous 14 la coalescence des gouttelettes d'huile encore en suspension dans le liquide le plus lourd tel que, par exemple, la lessive.

Le liquide en grande partie épuré sortant de l'orifice 16 et recueilli dans la chambre de collecte 3 se rassemble à la base de ladite chambre et est évacué par la tubulure d'évacuation 18.

Les constituants solides éventuellement en suspension dans le mélange contenus dans la chambre de séparation 2 se séparent de celui-ci par décantation et sont recueillis sur le fond tronconique 20 de ladite chambre qui peut être vidangée à intervalle régulier en ouvrant la vanne 22 de la tubulure de sortie inférieure 21.

Le courant de mélange M entrant dans la cuve de séparation 2 étant finement divisé en une multitude de filets liquides sortant des trous 11 du distributeur 10, la force du jet s'en trouve très modérée et la turbulence résultant de l'introduction de ce courant de mélange est considérablement réduite et ne perturbe que très peu l'écoulement laminaire de la masse liquide contenue dans la chambre de séparation 2. En outre, l'injection des petits courants de mélange étant effectuée d'une part à la partie haute de la chambre 2 et d'autre part à la périphérie de celle-ci, la masse de liquide contenu dans la zone centrale de la chambre de séparation s'en trouve encore moins perturbée et effectue une lente descente continue en direction des trous de captage 14 du collecteur inférieur 13.

En évitant ainsi de brasser inutilement la masse de liquide contenu dans l'enceinte de séparation lors de l'introduction du mélange, on favorise au maximum la séparation naturelle des liquides de densités différentes ainsi que la coalescence des gouttelettes du liquide le plus léger.

On notera également que le manchon de réglage des différences de niveau entre les orifices de sortie 8 et 16 permet de régler cette différence avec une grande précision en tenant compte de l'épaisseur de la couche de liquide le plus léger rassemblé au sommet de l'entonnoir 5, ce qui permet d'écrémer à volonté la phase liquide légère formant cette couche sans risquer de laisser déborder le liquide le plus lourd dans la chambre de collecte 4.

Une installation de séparation pourrait ne comporter qu'un seul des appareils décrits ci-dessus dont le rendement et le pouvoir d'épuration sont suffisants ; toutefois, selon l'invention pour obtenir un degré de séparation extrêmement poussé, on utilise un ensemble d'au moins deux appareils reliés en série et disposés à des niveaux différents, ces appareils étant raccordés entre eux de manière spécifique à l'invention.

Cette installation de séparation en continu avec un très haut degré d'efficacité comporte, outre les deux apparreils 31 et 32 mentionnés précédemment, un bac de détente et de dégazage 33 dont la sortie est reliée à l'entrée du distributeur 34 du premier appareil 31 de la chaîne et un réservoir 35 de recyclage en charge avec régulation par flotteur dont l'entrée est reliée par une conduite 36 à la sortie de la chambre de collecte 37 de la phase liquide légère du second appareil 32 de la chaîne. L'installation comporte en outre des moyens de captage 38 à différence de niveau constante immergés dans le bain traité contenu dans le réservoir 40 et un système de pompage 39 pour le transfert du mélange à partir des moyens de captage 38 jusqu'au bac de détente 33 à travers un conduit 41 et un bac de récupération 42 de la phase liquide légère telle que de l'huile récupérée à la sortie de la chambre de collecte 43 du premier appareil 31 de la chaîne de séparation, tandis que la phase liquide lourde épurée sortant de la chambre de collecte 44 de l'appareil 31 est envoyée par gravité par un conduit 45 à l'entrée du distributeur 46 du second appareil 32 de la chaîne pour être épurée de manière plus poussée, et la phase liquide lourde sortant de la chambre de collecte 47 de ce second appareil 32 est renvoyée dans la cuve 40 contenant le bain par l'intermédiaire d'un conduit 48.

Une conduite de décharge 49 est également prévue, cette conduite étant branchée en dérivation entre la conduite 41 reliant la sortie de la pompe 39 à l'entrée du bac de détente 33 et la cuve 40 contenant le bain à traiter.

Comme indiqué précédemment, le réservoir de recyclage 35 est alimenté à partir de la chambre de collecte 37 à travers le conduit 36 par un mélange à concentration variable en phase légère mais pouvant contenir une quantité non négligeable de phase lourde, ces proportions étant réglées en fonction du degré de pureté souhaité à la sortie de la chambre de collecte 47 de la phase lourde et la sortie dudit réservoir de recyclage 35 est reliée par un conduit 54 à l'entrée de la pompe 39. Le réservoir 35 est compartimenté en deux chambres superposées, à savoir une chambre haute 55 de réception du liquide et une chambre basse 56 d'évacuation de ce même liquide, la communication entre ces deux chambres étant réglée par un clapet 57 dont l'ouverture et la fermeture par gravité sont commandées par un flotteur 58 logé dans la chambre de réception 55 du liquide.

L'installation décrite précédemment fonctionne de la façon suivante :

Le tube coulissant 52 des moyens de captage 38 est supporté par les flotteurs 53 à une profondeur constante en dessous du niveau supérieur du bain à traiter contenu dans la cuve 40, si bien que la dénivellation existant entre le niveau du bain et l'embouchure du tube coulissant 52 reste constante quelle que soit la hauteur du niveau du bain dans la cuve. Le mélange est pompé par la pompe 39 et envoyé dans le bac de détente 33 à travers la tuyauterie 41. Le bac de détente et de dégazage 33 a essentiellement pour fonction d'éliminer toute bulle de gaz transportée par le mélange et susceptible de perturber la masse de liquide en cours de traitement dans les appareils de séparation ; ce bac de détente 33 joue donc un rôle très important dans la mesure où il sert de tampon pour éviter toute turbulence et perturbation au sein du mélange en cours de traitement. Le bac 33 joue également le rôle d'amortisseur en stabilisant l'écoulement provenant de la pompe et qui peut être perturbé par l'arrivée du liquide provenant du réservoir de recyclage. Le mélange à traiter est ensuite transféré directement du bac de détente 33 dans le distributeur 34 du premier appareil 31 de la chaîne de traitement. Une première séparation s'effectue dans cet appareil 31 selon le processus qui a été décrit précédemment et une phase liquide légère telle que de l'huile est recueillie dans la chambre de collecte 43 et récupérée dans le bac 42 tandis qu'une phase lourde est recueillie dans la chambre de collecte 44 et transférée par l'intermédiaire du conduit 45 directement au distributeur 46 du second appareil de traitement 32 en vue d'une séparation plus poussée. Un processus de séparation similaire s'effectue dans le second appareil de la chaîne, mais le réglage de ce second appareil à l'aide du manchon (29) de sortie du tube vertical du collecteur de phase dense est effectué de telle sorte que la phase légère soit entraînée dans la chambre de collecte (37) par une certaine quantité de phase lourde. Le mélange collecté dans cette chambre (37) est évacué en direction du réservoir (35) pour être recyclé à l'entrée de la pompe (39). La phase liquide lourde recueillie dans cette chambre 47 est ensuite renvoyée par l'intermédiaire du conduit 48 dans la cuve 40 contenant le bain, cette phase liquide lourde étant pratiquement totalement épurée des particules légères et égalementment des particules solides lourdes qui se sont décantées à la base des deux appareils de séparation 31 et 32. Le mélange provenant de la chambre 37 du deuxième appareil est recueilli dans la chambre de réception 55 du réservoir 35 et assure l'étanchéité à l'air du clapet 57. Tant que le niveau de liquide dans la chambre 55 n'atteint pas le flotteur 58, le clapet 57 reste sur son siège. Lorsque le niveau du liquide dans la chambre 55 atteint le flotteur 58 et le soulève, le clapet 57 rétablit la communication et une certaine quantité de mélange recueilli dans le second appareil 32 est recyclée dans le circuit en amont de la pompe 39.

On notera que dans le bac 40 et en l'absence de brassage une première séparation par gravité s'est déjà produite, la phase liquide légère remontant en surface et formant une couche superficielle à la surface du bain. Le fait d'utiliser des moyens de captage à différence de niveau constante permet de régler cette différence de niveau et de ne prélever dans le bain que la couche superficielle de celui-ci qui est la plus chargée en liquide de plus faible densité et la concentration de celui-ci dans le mélange pompé à travers la pompe 39 est encore augmentée par le mélange recyclé provenant du réservoir de recyclage 35.

L'installation selon l'invention permet une séparation très poussée de deux phases liquides non miscibles contenues dans un bain, ladite séparation s'effectuant en continu, sans interruption et permettant de renouveler le bain en permanence soit entre deux opérations de nettoyage, soit même pendant les opérations de dégraissage.

On notera qu'à l'exception de l'énergie de pompage, aucune énergie n'est consommée dans l'installation pour effectuer le traitement, ce qui la rend particulièrement économique. En outre, la rusticité des appareils employés et de l'installation elle-même est garante de sa robustesse et du peu d'entretien qu'elle nécessite, une simple vidange avec décrassage des cuves étant prévue de temps en temps.

Enfin, on notera que les appareils selon l'invention procèdent simplement en favorisant le processus naturel de séparation par gravité et coalescence sans intervention pour forcer cette séparation notamment au moyen de filtres ou autres instruments dont l'entretien, le nettoyage et le remplacement sont particulièrement coûteux.

Bien entendu, la portée de l'invention n'est pas limitée au seul mode de réalisation décrit ci-dessus à titre d'exemple non limitatif, mais elle couvre également toute variante qui ne différerait que par des détails de construction.

**Revendications**

1. Appareil de séparation de deux liquides non miscibles de densités différentes comportant une cuve (1) dans laquelle sont ménagées des chambres séparées (3, 4) de collecte des phases lourde et légère et une chambre de séparation (2) contenant un collecteur de phase légère formé par la partie supérieure d'un entonnoir convergeant vers le haut et un collecteur de phase lourde situé à la partie inférieure de la chambre de séparation (2), ledit collecteur de phase lourde étant constitué d'un élément creux (13) percé de trous de captage (14) et communiquant avec un conduit ascendant (15) débouchant dans la chambre de collecte (3) de phase lourde à un niveau légèrement inférieur à celui de l'orifice supérieur (8) du collecteur de phase légère, lesdits collecteurs assurant la communication entre la chambre de séparation (2) et les chambres (3, 4) de collecte correspondantes, un distributeur statique du mélange à séparer situé entre les collecteurs de phase légère et de phase lourde, caractérisé en ce que la chambre de séparation est un cylindre dont la partie supérieure est délimitée par une paroi (5) en forme d'entonnoir convergeant vers le haut, le distributeur statique du mélange à séparer se compose d'un conduit périphérique interne (10) qui longe horizontalement la paroi latérale de la cuve (1) et comporte des trous de distribution (11) répartis le long de cette paroi, les trous de captage (14) du collecteur de phase lourde sont situés sur la face inférieure de l'élément creux (13).

2. Appareil selon la revendication 1, caractérisé en ce que les trous du distributeur (10) débouchent vers le haut, au voisinage de la base de l'entonnoir (5) qui forme la paroi supérieure de la chambre de séparation (2).

3. Appareil selon la revendication 1, caractérisé en ce que le collecteur de phase lourde se compose essentiellement d'un conduit en forme de boucle (13) s'étendant horizontalement au voisinage du fond (20) de la chambre de séparation (2), et d'un conduit vertical ascendant 15 raccordé au conduit (13) et dont l'orifice de sortie (16) est légèrement en contrebas de l'orifice de sortie (8) de l'entonnoir (5) collecteur de la phase légère.

4. Appareil selon la revendication 3, caractérisé en ce que le fond (20) de la chambre de séparation (2) est en forme d'entonnoir convergent vers le bas et en ce que le conduit (13) du collecteur de phase lourde est disposé sensiblement à mi-hauteur dudit entonnoir.

5. Appareil selon l'une quelconque des revendications 1 à 4, caractérisé en ce que le niveau de l'orifice de sortie (16) du conduit ascendant (15) est réglable en hauteur.

6. Appareil selon la revendication 5, caractérisé en ce que l'extrémité haute du conduit ascendant (15) est munie d'un manchon (17) de réglage du niveau de sortie.

7. Appareil selon l'une quelconque des revendications 1 à 6, caractérisé en ce que le fond (20) et le haut (5) de la chambre de séparation (2) sont tronconiques et munis chacun d'un orifice central de sortie (21, 8).

8. Installation de séparation de deux liquides non miscibles contenus dans un bain à épurer, caractérisée en ce qu'elle comporte une batterie de deux appareils (31, 32) selon l'une quelconque des revendications 1 à 7, reliés en série, un bac de détente et de dégazage (33) relié à l'entrée du distributeur (34) d'un premier appareil (31), un réservoir de recyclage en charge (35) avec régulation par flotteur, des moyens de captage (38) à différence de niveau constante immergés dans le bain et des moyens de pompage des liquides à partir du bain en direction du bac de détente (33), les sorties des chambres de collecte (44, 47) de la phase liquide lourde des premier et second appareils étant reliées respectivement au distributeur statique (46) du second appareil (32) et à la cuve (40) contenant le bain à épurer tandis que les sorties des chambres de collecte (43, 37) de la phase liquide légère des premier et second appareils sont reliées respectivement à un bac de récupération (42) et au réservoir de recyclage (35) dont la sortie est reliée aux moyens de pompage (39) en amont de ceux-ci.

9. Installation selon la revendication 8, caractérisée en ce que les moyens de captage (38) à différence de niveau constante comportent un conduit fixe (50) relié aux moyens de pompage (39) et muni d'un tronçon vertical (51) d'extrémité, un tube (52) coulissant dans ledit tronçon et des flotteurs (53) supportant ledit tube à une profondeur déterminée dans le bain.

**Claims**

1. Apparatus for separating two immiscible liquids of different densities, comprising a vessel (1) which houses separate chambers (3, 4) for collecting the heavy and light phases, and a separation chamber (2) containing a light-phase collector formed by the upper part of an upward-converging funnel, and a heavy-phase collector located in the lower part of the separation chamber (2), the said heavy-phase collector consisting of a hollow element (13) possessing intake holes (14) and communicating with a riser pipe (15) coming out into the heavy-phase collecting chamber (3) at a level slightly below that of the upper orifice (8) of the light-phase collector, the said collectors providing communication between the separation chamber (2) and the corresponding collecting chambers (3, 4), a static distributor for the mixture to be separated being located between the light-phase and heavy-phase collectors, characterised in that the separation chamber is a cylinder whose upper part is delimited by a wall (5) in the shape of an upward-converging funnel, the static distributor for the mixture to be separated is composed of an internal peripheral pipe (10) which runs horizontally around the side wall of the vessel (1) and possesses distribution holes (11) spread out along this wall, and the intake holes (14) of the heavy-phase collector are located on the lower face of the hollow element (13).

2. Apparatus according to Claim 1, characterised in that the holes in the distributor (10) open out upwards, in the region of the base of the funnel (5) which forms the upper wall of the separation chamber (2).

3. Apparatus according to Claim 1, characterised in that the heavy-phase collector is essentially composed of a pipe in the form of a loop (13) extending horizontally in the region of the bottom (20) of the separation chamber (2), and of a vertical riser pipe (15) which is connected to the pipe (13) and whose outlet orifice (16) is slightly lower than the outlet orifice (8) of the funnel (5) for collecting the light phase.

4. Apparatus according to Claim 3, characterised in that the bottom (20) of the separation chamber (2) is in the shape of a downward-converging funnel, and in that the pipe (13) of the heavy-phase collector is located approximately half-way up the said funnel.

5. Apparatus according to any one of Claims 1 to 4, characterised in that the level of the outlet orifice (16) of the riser pipe (15) is adjustable in terms of height.

6. Apparatus according to Claim 5, characterised in that the top end of the riser pipe (15) is fitted with a sleeve (17) for adjusting the outlet level.

7. Apparatus according to any one of claims 1 to 6, characterised in that the bottom (20) and the top (5) of the separation chamber (2) are frusto-conical and are each provided with a central outlet orifice (21, 8).

8. Installation for the separation of two immiscible liquids contained in a bath to be purified, characterised in that it comprises a battery of two apparatuses (31, 32) according to any one of claims 1 to 7, connected in series, an expansion and degassing tank (33) connected to the inlet of the distributor (34) of a first apparatus (31), a recycling reservoir (35) regulated by a float, intake means (38) with a constant level difference, immersed in the bath, and means for pumping the liquids from the bath in the direction of the expansion tank (33), the outlets of the chambers (44, 47) for collecting the heavy liquid phase of the first and second apparatuses being connected respectively to the static distributor (46) of the second apparatus (32) and to the vessel (40) containing the bath to be purified, while the outlets of the chambers (43, 37) for collecting the light liquid phase of the first and second apparatuses are connected respectively to a recovery tank (42) and to the recycling reservoir (35), the outlet of which is connected to the pumping means (39), upstream of the latter.

9. Installation according to claim 8, characterised in that the intake means (38) with a constant level difference comprise a fixed pipe (50) connected to the pumping means (39) and fitted with a vertical end section (51), a tube (52) sliding in the said section, and floats (53) supporting the said tube at a determined depth in the bath.

**Ansprüche**

1. Vorrichtung zum Trennen zweier nicht mischbarer Flüssigkeiten unterschiedlicher Dichte mit einem Gefäß (1), in dem getrennte Kammern (3, 4) zum Sammeln der schweren und leichten Phasen sowie eine Trennkammer (2) vorgesehen sind, enthaltend einen Sammler für die leichte Phase, gebildet von dem oberen Teil eines sich nach oben verjüngenden Trichters und einen Sammler für die schwere Phase, der sich im unteren Teil der Trennkammer (2) befindet, welcher Sammler für die schwere Phase von einem Hohlelement (13) gebildet ist, das mit Fanglöchern (14) durchbohrt ist und in Kommunikation steht mit einer aufsteigenden Leitung (15), welche in die Kammer (3) zum Sammeln der schweren Phase auf einem Niveau mündet, das etwas tiefer liegt als das der oberen Öffnung (8) des Sammlers für die leichte Phase, welche Sammler die Kommunikation zwischen der Trennkammer (2) und den zugeordneten Sammelkammern (3, 4) sicherstellen, wobei ein statischer Verteiler für das zu trennende Gemisch zwischen den Sammler der leichten und schweren Phase angeordnet ist, dadurch gekennzeichnet, daß die Trennkammer ein Zylinder ist, dessen oberer Teil von einer Wandung (5) in Form eines sich nach oben verjüngenden Trichters abgetrennt ist, der statische Verteiler des zu trennenden Gemisches aus einer internen peripheren Leitung (10) besteht, der horizontal längs der Seitenwandung des Gefäßes (1) verläuft und Verteilungslöcher (11) längs dieser Wandung verteilt aufweist, wobei sich die Fanglöcher (14) des Sammlers für die schwere Phase auf der Unterseite des Hohlelements (13) befinden.

2. Vorrichtung nach Anspruch 1, dadurch gekennzeichnet, daß die Verteilungslöcher (10) nach oben münden nahe der Basis des Trichters (5), der die obere Wandung der Trennkammer (2) bildet.

3. Vorrichtung nach Anspruch 1, dadurch gekennzeichnet, daß der Sammler für die schwere Phase im wesentlichen aus einer Leitung in Form einer Schlaufe (13) besteht, die sich horizontal nahe dem Boden (20) der Trennkammer (2) erstreckt, sowie einer vertikal aufsteigenden Leitung (15), die mit der Leitung (13) verbunden ist und deren Auslaßöffnung (16) etwas niederiger liegt als die Auslaßöffnung (8) des Trichters (5) zum Sammeln der leichten Phase.

4. Vorrichtung nach Anspruch 3, dadurch gekennzeichnet, daß der Boden (20) der Trennkammer (2) in Form eines sich nach unten verjüngenden Trichters ausgebildet ist und daß die Leitung (13) des Sammlers für die schwere Phase etwa auf halber Höhe dieses Trichters angeordnet ist.

5. Vorrichtung nach einem der Ansprüche 1 bis 4, dadurch gekennzeichnet, daß das Niveau der Auslaßöffnung (16) der aufsteigenden Leitung (15) höheneinstellbar ist.

6. Vorrichtung nach Anspruch 5, dadurch gekennzeichnet, daß das obere Ende der aufsteigenden Leitung (15) mit einer Muffe (17) zum Einstellen des Auslaßniveaus versehen ist.

7. Vorrichtung nach einem der Ansprüche 1 bis 6, dadurch gekennzeichnet, daß der Boden (20) und der Deckteil (5) der Trennkammer (2) kegelstumpfförmig sind und jeweils mit einer zentralen Auslaßöffnung (21, 8) versehen sind.

8. Anlage zum Trennen zweier nicht mischbarer in einem zu reinigenden Bad enthaltener Flüssigkeiten, dadurch gekennzeichnet, daß sie eine Batterie von zwei Vorrichtungen (31, 32) nach einem der Ansprüche 1 bis 7, in Serie miteinander verbunden, einen Beruhigungs- und Entgasungskessel (33), verbunden mit dem Einlaß des Verteilers (34) einer ersten Vorrichtung (31), ein Ladungsrezyklisierungsreservoir (35) mit Schwimmerregelung, Fangmittel (38) mit konstanter Niveaudifferenz, eingetaucht in das Bad, sowie Mittel zum Pumpen der Flüssigkeiten aus dem Bad in Richtung des Entspannungskessels (33) umfaßt, wobei die Auslässe der Sammelkammern (44, 47) der schweren Phase der ersten und der zweiten Vorrichtung mit dem statischen Verteiler (46) der zweiten Vorrichtung (32) bzw. mit dem Gefäß (40) verbunden sind, welches das zu reinigende Bad enthält, während die Auslässe der Sammelkammern (43, 37) der leichten Phase der ersten und der zweiten Vorrichtung mit einem Rekuperationskessel (42) bzw. mit dem Rezyklisierreservoir (35) verbunden sind, dessen Auslaß mit den stromaufwärts derselben liegenden Mitteln zum Pumpen (39) verbunden ist.

9. Anlage nach Anspruch 8, dadurch gekennzeichnet, daß die Fangmittel (38) mit konstanter Niveaudifferenz eine feste Leitung (50) umfassen, die mit den Mitteln zum Pumpen (39) verbunden sind und mit einem vertikalen Endstutzen (51) versehen ist, wobei ein in dem Stutzen gleitbewegliches Rohr (52) von Schwimmern (53) auf einer vorgegebenen Tiefe innerhalb des Bades gehalten ist.

FIG.1

1

FIG.2

FIG.3

0 038 752